# EUROPEAN PATENT APPLICATION

(11) **EP 4 811 159 A2**
(43) Date of publication of application: **23.09.2026**
(21) Application number: 26159108.5
(22) Date of filing: 17.02.2026
(51) Int. Cl.: G06F 16/248, G06F 16/242, G06F 16/2452

(54) **SECURE DATA VISUALIZATION WITH NATURAL LANGUAGE PROMPTING**

(30) Priority: 18.03.2025 US 202519082752
(71) Applicant: Rakuten Group, Inc., Setagaya-ku Tokyo 158-0094 (JP)
(72) Inventor: BLAIZE, Julien, Tokyo, 158-0094 (JP); BARKA, Yannis, Tokyo, 158-0094 (JP); LEE, Emmylia, Tokyo, 158-0094 (JP)
(74) Representative: EIP

(57) **Abstract**

Visualizations are generated from visualization data defined by columns of fields in a database. A user prompt for the visualization is received, then metadata of the fields in the database, one or more system prompts, and the user prompt are transmitted to a natural language query interface to a large language model generative artificial intelligence system. The system prompts include a request to generate a visualization specification and corresponding database query components based upon the metadata and the user prompt. These are received, and a database query including the database query components is composed, then executed to an intermediary data interface of the database that stores the visualization data. Selected visualization data responsive to the database query is received, and the visualization is generated with the visualization specification.

## Description

### CROSS-REFERENCE TO RELATED APPLICATIONS

Not Applicable

### STATEMENT RE: FEDERALLY SPONSORED RESEARCH/DEVELOPMENT

Not Applicable

### BACKGROUND

### 1. Technical Field

The present disclosure relates generally to data visualization and deep learning, and more particularly, to data visualization systems utilizing generative pre-trained transformer large language models to generate visualizations from natural language prompts while maintaining security and privacy of underlying data.

### 2. Related Art

An online service platform is capable of providing insights and analysis of large-scale performance data through various visualization techniques such as charts, graphs, maps, and the like. The configuration and selected data ranges for these visualizations were typically preset and predetermined. Recently, some tools have begun to accept natural language inputs to generate data visualizations. Generative artificial intelligence based on large language models (LLMs), and specifically the generative pre-trained transformer (GPT) framework may be utilized. Via a chat interface, the LLM can be prompted to generate visualizations from an underlying raw dataset.

Although significant improvements in productivity are possible, conventional LLM-based visualization tools require the transmission of the underlying data to the LLM system, which are frequently public and without adequate measures to protect sensitive data. This can lead to potential data breaches and privacy violations.

One known alternative approach involves providing the LLM system with a complete description of the underlying database and prompting it to generate Structured Query Language (SQL) queries for the database. There are several deficiencies with this approach, however. One is the need for two LLMs: one to build the query, and another build the visualization responsive to the prompt. Furthermore, it becomes necessary to expose the underlying data, thereby losing a layer of abstraction to isolate one data silo from another. There are also inconsistencies with the response generated by the LLM depending on the specific prompting, even though the same underlying data is provided. The addition of security layers to the query becomes difficult because the query format cannot be managed, resulting in complex prompts. Enforcing restrictions on access to underlying data allowed for one class of users but not another also becomes challenging.

Another known approach to natural language input-based data visualization systems involves prompting the LLM to build the visualization from predefined data. The VizGPT project is one implementation for such an approach, though there are a number of deficiencies associated therewith. For instance, it is necessary for the data to be predefined, so it is operable only on a small subset of data provided as a tabular comma-separated value (CSV) file. Though some filters and computations may be applied as the visualization is generated, it is complex and inefficient. Like the other approach considered above, another solution to build the subset of data used for the visualization is necessary. In order to explore additional details underlying the visualization such as causality and reasoning, it may be necessary to send the data to the LLM or allow the LLM to query the data through a callback tool, but as indicated above, such data exposure/sharing may be problematic for certain use cases. Providing the user prompt and the query built from a different tool, then requesting visualization oftentimes leads to visualizations that are valid for only that particular query with the user question being largely ignored. On the other hand, providing the user prompt without the query built from the different tool is likely to generate visualizations that do not match the data generated by the query.

Accordingly, there is a need in the art for a data visualization system that can leverage the strengths of LLM systems for generating useful data visualizations from simple natural language queries, while maintaining the security and privacy of the underlying data.

### BRIEF SUMMARY

The present disclosure contemplates large language model (LLM) generative artificial intelligence-based data visualization which retains control over the security of the visualized data. This may be achieved by generating the visualization specification and an associated database query together from single natural language query, without sharing the visualized data with the LLM. Accompanying the natural language query is a series of system prompts that instruct the LLM to produce a specifically structured visualization specification and a database query, based on provided database column structure metadata.

According to one embodiment of the present disclosure, there may be a method for generating a visualization from visualization data defined by columns of fields in a database. The method may include a step of receiving a user prompt for the visualization, followed by a step of transmitting metadata of the fields in the database, one or more system prompts, and the user prompt. These may be transmitted to a natural language query interface to a large language model system. The one or more system prompts may include a request to generate a visualization specification and corresponding database query components based upon the metadata and the user prompt. The method may also include receiving the visualization specification and the components of the database query as generated by the large language model system in response to the user prompt, the one or more system prompts, and the metadata. There may also be a step of composing a database query, which may include database query components as generated by the large language model system. Then, the composed database query may be executed to an intermediary data interface of the database that is storing the visualization data. The method may also include a step of receiving selected visualization data responsive to the database query from the database through the intermediary data interface. The method may further include generating the visualization from the selected visualization data based upon the visualization specification.

According to another embodiment of the present disclosure, the foregoing method may be implemented as one or more programs of instruction executable by a server computer system and embodied as an article of manufacture comprising a non-transitory program storage medium that is readable by the server computer system.

Still another embodiment of the present disclosure may be a system for generating a visualization from visualization data defined by columns of fields in a database. The system may include a natural language interface that is in communication with a large language model system that is responsive to a user prompt for the visualization. The system may further include a large language model output receiver that is in communication with the large language model system. The large language model output receiver may be receptive to a visualization specification and corresponding database query components that may be generated in response to the user prompt, metadata of the fields in the database, and one or more system prompts. The system prompts may include a request to generate the visualization specification and the database query components. The system may also include an intermediary data interface to the database that executes a database query composed from the database query components. The intermediary data interface may also be receptive to selected visualization data from the database output in response to the database query. The system may also include a visualization generator that is in communication with the intermediary data interface and the large language model output receiver. The visualization may be generated from a combination of the selected visualization data and the visualization specification.

The present disclosure will be understood accompanying by reference to the following detailed description when read in conjunction with the drawings.

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1 is a block diagram of a secure data visualization system architecture according to one embodiment of the present disclosure;
FIG. 2 is a flowchart illustrating one aspect of a method for generating a visualization in an initial iteration where the user prompt is first provided;
FIG. 3 is a sequence diagram illustrating the steps for generating a visualization according to an embodiment of the present disclosure in an initial iteration where the user prompt is first provided;
FIG. 4 is a flowchart illustrating another aspect of the method for generating an updated visualization when a follow-up user prompt is provided;
FIG. 5 is a sequence diagram illustrating the steps for generating an updated visualization in response to a follow-up user prompt according to another embodiment of the present disclosure; and
FIG. 6 is a screenshot of an exemplary visualization generated in accordance with the embodiments of the present disclosure.

### DETAILED DESCRIPTION

The present disclosure is directed to various embodiments of secure data visualization with natural language prompting. The detailed description set forth below in connection with the appended drawings is intended as a description of the several presently contemplated embodiments and is not intended to represent the only form in which such embodiments may be developed or utilized. The description sets forth the functions and features in connection with the illustrated embodiments. It is to be understood, however, that the same or equivalent functions may be accomplished by different embodiments that are also intended to be encompassed within the scope of the present disclosure. It is further understood that the use of relational terms such as first and second and the like are used solely to distinguish one from another entity without necessarily requiring or implying any such actual relationship or order between such entities.

Generally, data visualization involves aggregation, compartmentalization, summarization, and organization of data into graphs, charts, maps, and other visual aids. From such visual aids, patterns and trends may become visible, as well as outliers and anomalies to which further detailed attention may be directed. Presented with such visual aids, technical information may be rendered more accessible to audiences that may not necessarily have deep familiarity with the data.

The embodiments of the present disclosure may be utilized to generate visualizations of any large set of data, though the features thereof will be described herein in the context of a specific online service platform that tracks the performance of advertising campaigns. Notwithstanding the disclosure of any details that may be specific to such an online service platform, it will be appreciated that the described features may be utilized in other contexts, services, and applications, and such details are not intended to be limiting. Based upon the description of these details, the features may be utilized in other applications by those having ordinary skill in the art.

Anywhere content or services are presented online, advertisements are likely to be close by, calling attention to various products and services offered by the sponsors paying for the placement. A wide variety of content including video, audio, images, and text are made available through online media publishers, social media platforms, search engines, e-commerce platforms, and other websites, which in turn are accessed by users with computers, smartphones, tablets, and television sets. The advertisements accompanying this content may be interactive, or at a minimum, able to report various passive metrics concerning the user that viewed the advertisement, such as location, Internet Protocol (IP) address, presentation duration, and browser configuration. Links embedded within these advertisements may be activated by the user, thereby routing the user to the advertiser's site where the good or service may be purchased. All such actions may be tracked and reported to the advertiser.

One specific data point corresponding to one advertisement interaction sequence for a single user may not provide much insight, but over the span of hundreds, thousands, or millions of users, across different advertisement platforms and advertisement content, interaction patterns may arise that are helpful toward improving future performance. Each user interaction results in a modest volume of data being generated, with the total volume being many orders of magnitude higher in a typical advertising campaign. The embodiments of the present disclosure broadly contemplate the generating of visualizations from a natural language query, such as "show me our top 10 publisher trends." Once an initial visualization is generated, additional follow-up queries may be input to generate follow-up visualizations.

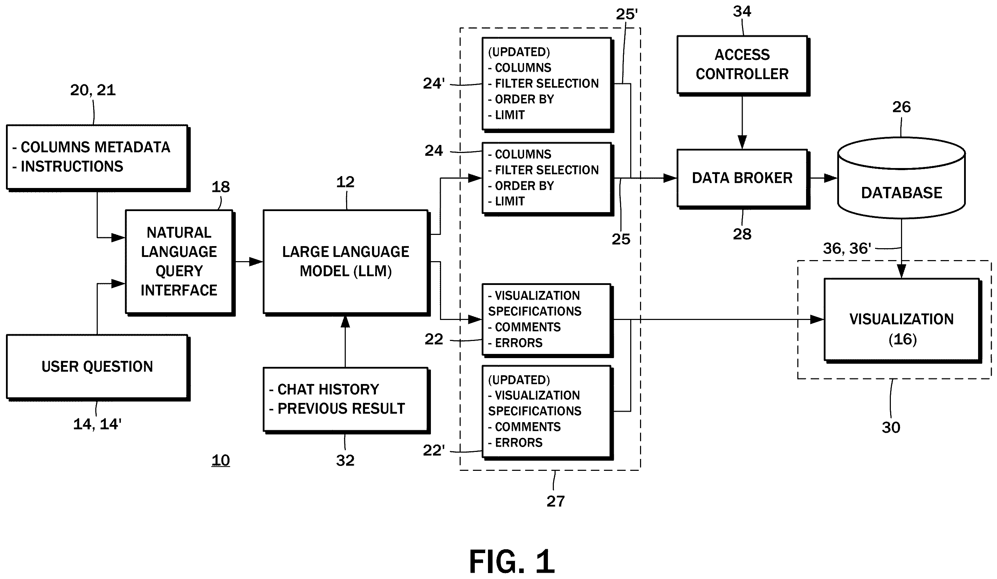

With reference to the block diagram of FIG. 1, a visualization system 10 includes a large language model (LLM) artificial intelligence system 12 that processes a natural language query 14 and generates a visualization 16 in response thereto. According to one embodiment, the LLM 12 may be based upon the generative pretrained transformer (GPT) framework and incorporates a natural language query interface 18 that accepts text-based natural language inputs. The natural language query interface 18 may also be referred to as a chat interface, as multiple queries can be input in sequence with each query adding to the overall request to the LLM 12.

As a departure from existing visualization systems, the system 10 secures the underlying data for the visualization from the LLM 12 and entirely limits sharing or transmission to the same. Rather, through the user prompt, referred to above as the natural language query 14, and a series of system prompts 20 and database column metadata 21, the LLM 12 is requested to generate specifications 22 for the visualization together with database query components 24 to a database 26. The visualization specifications 22 and the database query components 24 may be output by the LLM 12 to an LLM output receiver 27. An assembled database query 25 is provided to and processed by an intermediary data interface 28, also referred to as a data broker, which abstracts out the detailed table and field structure of the database 26. The data responsive to the database query 25 is combined with the visualization specifications 22 by a visualization generator 30 to produce the visualization 16. To the extent that the natural language query/user prompt 14 is a second or subsequent one in an interactive session, the LLM 12 may utilize historical data 32 to reformulate the outputs of the visualization specifications 22 and the database query components 24. In some embodiments, the historical data 32 is maintained independently of the LLM 12. Additional details pertaining to the foregoing components and the functionalities performed thereby will now be considered.

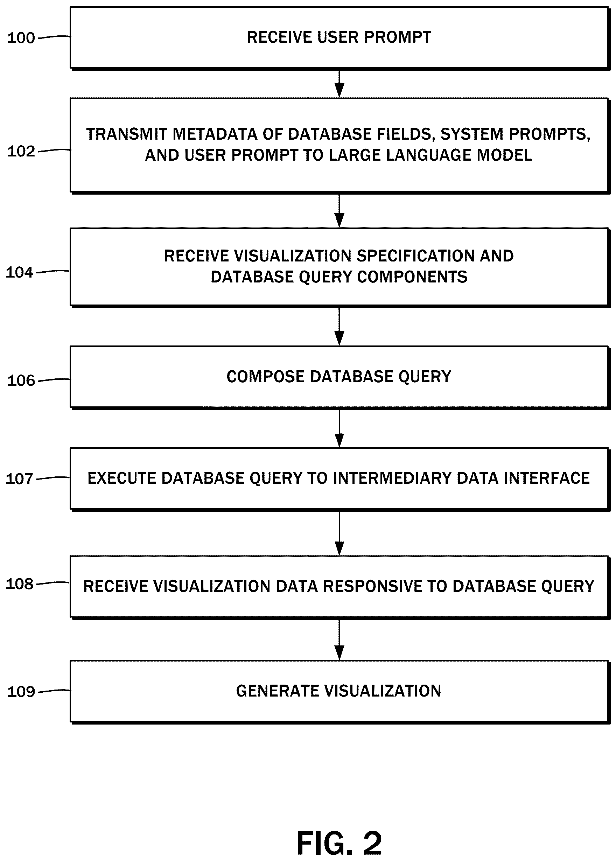

Referring additionally to the flowchart of FIG. 2, another embodiment of the present disclosure is a method for generating a visualization, which may begin with a step 100 of receiving the user prompt/natural language query 14 such as the one mentioned above, e.g., "show me our top 10 publisher trends." The method also includes a step 102 of transmitting to the LLM 12 through its natural language query interface 18, database column metadata 21 of the fields or columns of the database 26 as well as one or more system prompts 20.

In its most basic implementation, the database 26 may be a relational type with one or more tables, each of which is organized in columns of fields and rows of records identified by a unique key. Queries conforming to the Structured Query Language (SQL) may be issued to the database 26, or more specifically, the database management system thereof, and results responsive to the query may be output to the requesting process/application. In such an implementation the database column metadata 21 may be a listing of the various fields on the database 26, and further, a separate intermediary data interface 28 such as the data broker may not be necessary.

In another embodiment, the database 26 may be a far more complex data storage system with heterogenous database management systems, data tables and data storage types spanning multiple storage systems and hardware. To this end, the data broker or intermediary data interface 28 may serve as a unitary interface to the diverse database environment, with only a conventional SQL query being used to retrieve the stored data. The SQL query may be translated to non-SQL data sources, non-relational data sources and potentially federated data sources, as well as handle security, routing of data, permission and authorization checks, and so on. The database 26 may thus be comprised of hundreds of data marts with different granularity and purpose.

The data broker or intermediary data interface 28 is understood to implement standard SQL functions and query syntax, and so the requestor may structure the query to such single endpoint without knowing the specific storage location for the query. Depending on the query, the computing load, and predefined priority rules, the query may be resolved against a single table, thereby hiding from the calling application any necessary join and aggregation operations. In some cases, a single query may call five or more underlying tables to return the requested data. An addition of filter conditions may also entirely change the selected tables used for generating the results for purposes of efficiency.

For the exemplary implementation of the visualization system 10, the data broker or intermediary data interface 28 may provide access to over two hundred and fifty to three hundred and fifty columns/fields of data. Some of the columns accessible via the data broker 28 may be columns that are defined through queries evaluated at runtime. In some cases, certain combinations of columns are unable to be queried together, referred to as incompatible combinations that are a result of join operations that cannot be associated through a join operation performed by the data broker 28. As will be described in further detail below, the system prompts 20 to the LLM 12 can be structured to avoid these incompatible combinations.

Whether in the simplest implementation of the database 26 or in the more complex implementation that utilizes the data broker or intermediary data interface 28 to access the database 26, the database column metadata 21 enumerates or lists each one, and provided to the LLM 12. One purpose of the database column metadata 21 is to enable the LLM 12 to select the needed columns to satisfy the user prompt 14 and may be provided in a JavaScript Object Notation (JSON) format comprised of text in name-value pairs and arrays. Among the contemplated name-value pairs include an identification of the column, a label text for the column, a semantic type for the column (e.g., string, number, date, etc.), a detailed description for the column, a type of the column, and a category of the column. Additionally, an enumerated values name-value pair can be used to list all of the potential values for a column so that the LLM 12 can be instructed on the exact spelling for the word/data in that column. Furthermore, a wrapper name-value pair can be used to hide more complex columns from the LLM 12. For example, there may be multiple date-related columns in the database 26 such as transaction date or process date, and the LLM 12 need only be instructed on a date field generally, with subsequent expansion being operative to discern between the transaction date and the process date.

As indicated above, one or more system prompts 20 are also transmitted to the LLM 12 via the natural language query interface 18. Generally, the system prompts 20 include a request to generate the visualization specification 22 and the database query components 24 based upon the database column metadata 21 and the user prompt 14. In one embodiment, two separate calls to the LLM 12 may be made. The first call may be to prompt the LLM 12 to select the best view to answer the question stated in the user prompt 14.

As referenced herein, a view refers to a predefined group of columns created to ease the column selection process for the LLM 12. More particularly, certain visualization concepts may be hidden from consideration by the LLM 12. This also serves the purpose of avoiding incompatible combinations of columns as earlier described. Continuing with the aforementioned example of the different types of date values such as process date or transaction date, the LLM 12 may be instructed to apply a date limitation for a query without specifically mentioning whether the process date or the transaction date is to be used. The selection between the different types may be made through the user interface without another call to the LLM 12. Extraneous noise to the LLM 12 can thus be avoided, especially where the parameter is user-selected. The view is understood to contain two sets of column designations. The first set contains the main database columns that will be provided to the LLM 12 to decide its selection of the view and includes the key columns for exploring a given scope of data. The second set contains additional columns that can be selected with the first set. These columns are intended to be displayed only if the user makes a manual addition in a generated report and are not provided to the LLM 12.

Abbreviations and other terminology specific to the application context of the visualization system 10 may also be defined in the system prompts 20 to better position the LLM 12 to process such abbreviations and terminology that may be present in the user prompts 14. For example, "YoY" can be defined as or expanded to "Year over Year," "MoM" can be defined as or expanded to "Month over Month," "WoW" can be defined as or expanded to "Week over Week," "DoD" can be defined as or expanded to "Day over Day," and "brand" can be defined as meaning advertiser. These are a few examples of possible abbreviations and definitions, and other abbreviations useful in a given setting may be added as desired. Furthermore, additional guardrails with respect to the type of user prompts that the LLM 12 is permitted to respond to may also be defined in the system prompts 20. For example, the LLM 12 can be instructed to generate an error if the user prompt 14 does not include a request related to data, column lists, or visualization creation.

In response to the first call, the LLM 12 may respond with either a view number or an error message. Thereafter, in a second call, details of the columns from the selected view are provided to the LLM 12, along with instructions to generate the visualization specification 22 and the database query components 24.

In an exemplary embodiment, the visualization specification 22 follows the grammar defined by Vega-lite and specified in the JSON name-value format, and is effectively a high-level description of the graph, chart, map, or other visualization to be generated. When the user interface is being rendered, the underlying visualization data together with the visualization specification 22 may be generated by a Vega compiler that outputs the defined visualization. Generating the visualization specification 22 involves providing the column names and potential filtering values, but otherwise, no other data is needed by the LLM 12. Where the LLM 12 encounters errors, or other caveats with any particular name-value pair generated, error messages or comments may be incorporated into the visualization specification 22. Although the LLM 12 can generate visualization specifications 22 that are mostly syntactically and functionally correct, additional post-processing thereto may be applied to correct small errors. For example, the LLM 12 may utilize the equal-sign (=) instead of the word "equals", or utilize an abbreviation "ASC" instead of the the whole word "ASCENDING" as required by the Vega-lite syntax. Such errors may be readily identified and corrected on the fly.

As the visualization specification 22 can be generated without any underlying data to be sent or processed by the LLM 12, so can the database query components 24. The visualization specification 22 and the database query components 24 are requested together so that the LLM 12 can ensure one is consistent or compatible with the other. In the system prompt 20, the LLM 12 can be requested to generate the most important parts of the database query 25 needed to answer the question asked in the user prompt 14.

The database query components 24 requested include an identification of the columns that will be used in the selection request and as input data for the visualization, as well as any filters identifying the specific column, operation, and limit values. The LLM 12 can also be requested to generate the sorting order of each column specified, as well as a numerical limit to any parameters in the database query components 24. The start and end date, or a date range may also be requested of the LLM 12 to generate. The database query 25 is assembled from the database query components 24 and transmitted to the data broker or intermediary data interface 28 is understood to conform to SQL syntax, though complex queries such as select in select or complex join operations are not permitted. In embodiments that incorporate the data broker, such complex queries are unneeded because it performs those functions outside the purview of the database query 25.

The method illustrated in the flowchart of FIG. 2 thus continues with a step 104 of receiving the visualization specification 22 and the database query components 24 from the LLM 12. Again, the visualization specification 22 and the database query components 24 are generated by the LLM 12 in response to the user prompt 14, the one or more system prompts 20, and the database column metadata 21. The method continues with a step 106 of composing a database query 25, which may be assembled from the database query components 24 as described above. After the database query 25 is composed, the method may then proceed to a step 107 of executing the database query to the data broker or intermediary data interface 28.

In some deployments of the visualization system 10, the data hosted in the database 26 may be particular to one customer/client or another. With the online advertising market in particular, the privacy of data collected for an advertiser or publisher is of the utmost importance. Platforms that collect and analyze business metrics are typically offered by service providers that handle multiple clients, so there is a heighted risk of data leakage. Without adequate safeguards, one customer may be permitted to request data from the database 26 belonging to another, possibly a competitor. Accordingly, the visualization system 10 may include an access controller 34 that inserts a user identifier corresponding to that providing the user prompt 14 into the database query 25. The intermediary data interface 28 is configured to return responsive data that is only associated with the specified user identifier in the database query 25. The controlled assembly of the database query 25 from the database query components 24 further ensures against SQL injection attacks, where malicious SQL queries may be prompted to be generated by the LLM 12, or otherwise substituted for a legitimate database query to the intermediary data interface 28. Each of the database query components 24 may be individually evaluated for potential SQL injection.

The database 26, and specifically the data broker or intermediary data interface 28, responds to the database query 25 and returns the specified visualization data 36 in a step 108, followed by a step 109 of generating the visualization 16 from the returned visualization data 36, which is formatted in accordance with the visualization specification 22. The user may be permitted to make minor adjustments to the presentation of the visualization 16 such as adding columns, modifying the date range, or adding another date range for comparison purposes. A subsequent call to the LLM 12 is not needed for such adjustments, though another database query 25 may be needed to refresh the underlying data.

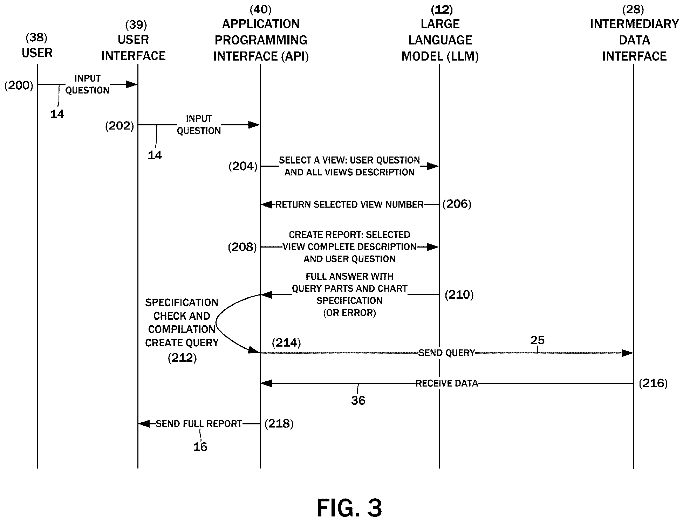

The sequence diagram of FIG. 3 illustrates the various functional components of the visualization system 10 and the data exchanged between each as the visualization 16 is generated. At the beginning, a user 38 inputs a question into the user interface 39 in a sequence 200. This question corresponds to the aforementioned user prompt 14. The user prompt 14 is next transmitted to an application programming interface 40, which generally corresponds to the natural language query interface 18 and those elements that directly communicate with the LLM 12. This takes place in a sequence 202. Next, in a sequence 204, the first of the system prompts 20 or calls to the LLM 12 is to request the selection of the best view to answer the user question, which is accompanied by the description of the views with specific column/field selections for each. The LLM 12 returns the selected view number in a sequence 206. With the view selected, the second call to the LLM 12 are the instructions to generate the visualization specification 22 and the database query components 24 in a sequence 208. The full answer with the database query components 24 and the visualization specification 22 is returned by the LLM 12 in a sequence 210. Before initiating the database query 25, the visualization specification 22 is checked for correctness, and the string making up the database query 25 is assembled from the database query components 24 in a sequence 212. The database query 25 is then transmitted to the intermediary data interface 28 in a sequence 214, followed by the responsive visualization data 36 in a sequence 216. With the visualization data 36 and the visualization specification 22 in hand, the full report, e.g., the visualization 16, is returned to the user interface 39.

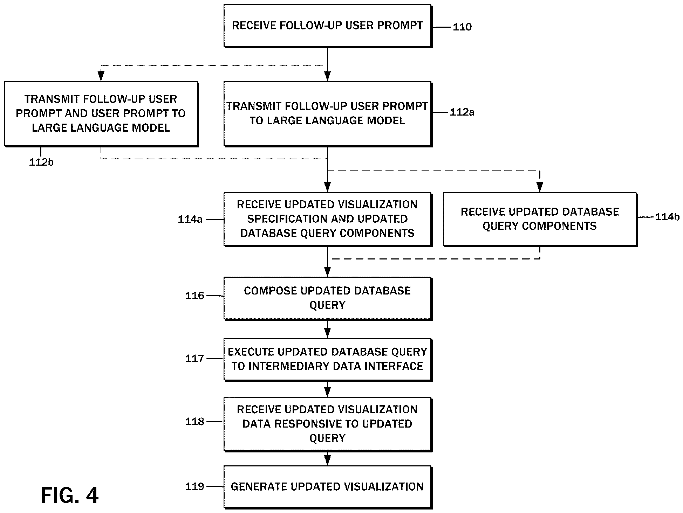

Referring to the flowchart of FIG. 4, it is also contemplated for the user to request further modifications to the visualization 16. Such requests may be provided in the form of a follow-up user prompt 14', and so the method includes a step 110 receiving such follow-up user prompt 14' that corresponds to the initial step 100 of receiving the original user prompt 14. As noted above, the natural language query interface 18 may maintain the historical data 32 of earlier prompt iterations, including chat history and previous results. Thus, it is not necessary for the user to resubmit the system prompts 20 or the database column metadata 21 to continue the dialog session. In one variation, only the follow-up user prompt 14' may be transmitted to the LLM 12 in a step 112a. In another variation, the follow-up user prompt 14' and the original user prompt 14 may be transmitted to the LLM 12 in a step 112b. In some cases, the follow-up user prompt 14' results in the LLM 12 generating both an updated visualization specification 22' and updated database query components 24' in a step 114a. In other cases, the LLM 12 may generate only the updated database query components 24' in a step 114b. Either way, the method continues to a step 116 composing the updated database query 25'. After composition, the updated database query 25' is executed to the data broker or intermediary data interface 28. The updated visualization data 36', which is responsive to the updated database query 25', may be received by the visualization generator 30 in a step 118. Thereafter, in a step 119, an updated visualization 16' may be generated.

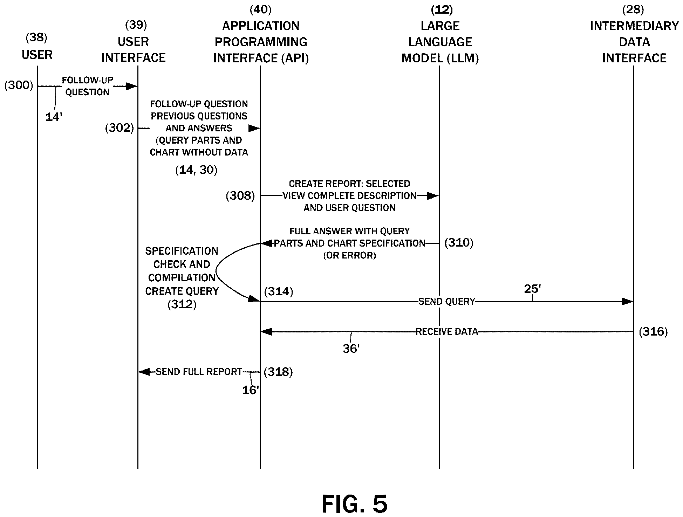

The sequence diagram of FIG. 5 again illustrates the functional components of the visualization system 10 and the data exchanged between each component, though this diagram shows the sequence as the updated visualization 16' is generated in response to a follow-up question. The user 38 inputs a follow-up question into the user interface 39 in a sequence 300. This question corresponds to the follow-up user prompt 14' discussed above. The follow-up user prompt 14', along with previous user prompts 14 and other historical data 32 is next transmitted to the application programming interface 40 in a sequence 302. Because the most suitable view has already been selected in the initial iteration, the next call to the LLM 12 is the instructions to generate the updated visualization specification 20' and the updated database query components 24' in a sequence 308. The full answer with the updated database query components 24' and the updated visualization specification 20' is returned by the LLM 12 in a sequence 310. Before initiating the updated database query 25', the updated visualization specification 20' is checked for correctness, and the string making up the updated database query 25' is assembled from the updated database query components 24' in a sequence 312. The updated database query 25' is then transmitted to the intermediary data interface 28 in a sequence 314, followed by the responsive updated visualization data 36' in a sequence 316. With the updated visualization data 36' and the updated visualization specification 20' in hand, the full report, e.g., the updated visualization 16', is returned to the user interface 39.

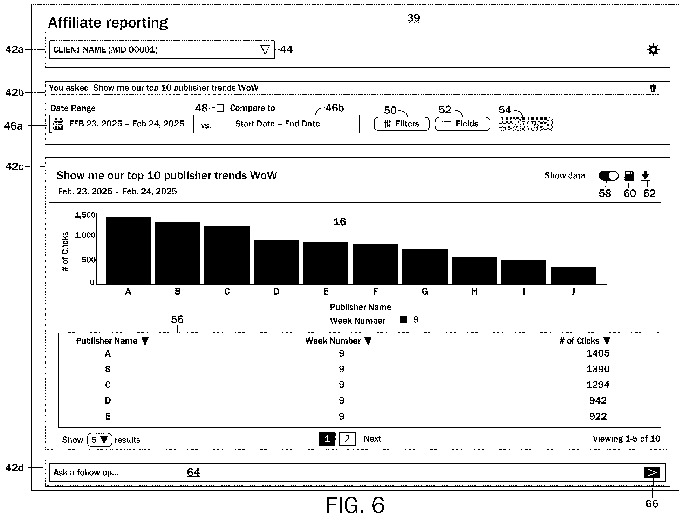

The screenshot of FIG. 6 illustrates an exemplary embodiment of the user interface 39, which is generally segregated into a first section 42a, a second section 42b, a third section 42c, and a fourth section 42d. The first section 42a includes a drop-down box 44 through which a particular owner of the data to be visualized may be selected. As discussed above, the visualization system 10 limits access to the underlying visualization data 36 only to those users 38 that have the proper authorization to access it, and the drop-down box 44 is the modality by which the particular authorized user is set.

The second section 42b includes various interactive control elements that make minor changes to the visualization that do not require a follow-up call to the LLM 12 to request updated visualization specifications 22. For instance, there is a first date selection box 46a through which a date range for the selection of the visualization data 36 may be modified. There is also a second date selection box 46b for selecting a different date range for which a comparison visualization may be generated. The comparison may be activated with a checkbox 48. Additional data filters may be selected via a filter button 50, and selections of additional fields/columns may be made via a fields button 52. Once different date ranges, filters, and fields are selected, the visualization may be refreshed by activating an update button 54.

The third section 42c displays the visualization 16, which in the illustrated example, a bar graph comprised of ten plots each corresponding to a different publisher, as requested in the user prompt 14, e.g., top 10 publisher trends. Additionally, the third section 42c includes a table 56 showing the data corresponding to the visualization 16, which is organized by rows of records each associated with a different publisher, a column for a specified filter condition, and the underlying data of the "number of clicks" bar graph elements. The sort order, and the column by which the rest of the table is sorted, may be set by activating the desired column header. The visibility of the table 56 may be toggled on and off via a switch 58. The specific visualization 16 may be saved for future recall via a save button 60, and the underlying visualization data 36 may be downloaded via a download button 62.

Lastly, the fourth section 42d includes a chat interface 64 that corresponds to the natural language query interface 18 with which additional user prompts 14 or natural language queries may be entered. A submit button 66 may be activated to transmit the text input in the chat interface 64 to the LLM 12.

In the various embodiments of the present disclosure, particularly where public LLMs 12 that are continuously being trained with user-provided data, the underlying data that is visualized by the system 10 is restricted from inadvertently becoming part of the training corpus. Significant improvements in efficiency are also contemplated, as a large volume of the underlying data is not being transmitted to the LLM 12. This also results in reduced costs, as only metadata 21 of the fields in the database is transmitted, meaning that fewer tokens are being sent. The response time of the LLM 12 is also understood to be faster as a consequence of the fewer tokens that are analyzed. Based upon the efficiencies gained through the various embodiments of the present disclosure, improvements of up to 63% in data extraction efficiency are envisioned. This, in turn, may yield productivity increases by up to seventeen (17) minutes per day.

The particulars shown herein are by way of example and for purposes of illustrative discussion of the embodiments of secure data visualization with natural language prompting and are presented in the cause of providing what is believed to be the most useful and readily understood description of the principles and conceptual aspects. In this regard, no attempt is made to show details with more particularity than is necessary, the description taken with the drawings making apparent to those skilled in the art how the several forms of the present disclosure may be embodied in practice.

## Claims

1. A method for generating a visualization from visualization data defined by fields in a database, the method comprising:
receiving a user prompt for the visualization;
transmitting metadata of the fields in the database, one or more system prompts, and the user prompt to a natural language query interface to a large language model system, the one or more system prompts including a request to generate a visualization specification and corresponding database query components based upon the metadata and the user prompt;
receiving the visualization specification and the components of the database query as generated by the large language model system in response to the user prompt, the one or more system prompts, and the metadata;
composing a database query from database query components as generated by the large language model system;
executing the database query to an intermediary data interface of the database storing the visualization data;
receiving selected visualization data responsive to the database query from the database through the intermediary data interface; and
generating the visualization from the selected visualization data based upon the visualization specification.

2. The method of Claim 1, further comprising:
receiving a follow-up user prompt for an updated visualization;
transmitting at least the follow-up user prompt to the natural language query interface;
receiving an updated visualization specification and updated database query components as generated by the large language model system in response to the follow-up user prompt;
composing an updated database query including the updated database query components as generated by the large language model system;
executing the updated database query to the intermediary data interface;
receiving updated visualization data responsive the updated database query; and
generating the updated visualization from the updated visualization data based upon the updated visualization specification.

3. The method of Claim 2, further comprising:
re-transmitting the user prompt together with the follow-up user prompt.

4. The method of Claim 1, further comprising:
receiving a follow-up user prompt for an updated visualization;
transmitting at least the follow-up user prompt to the natural language query interface;
receiving updated database query components as generated by the large language model system in response to the follow-up user prompt;
composing an updated database query including the updated database query components as generated by the large language model system;
executing the updated database query to the intermediary data interface;
receiving updated visualization data responsive the updated database query; and
generating the updated visualization from the updated visualization data based upon the visualization specification.

5. The method of Claim 1, wherein the database query components define one or more limits to a scope of the selected visualization data returned by the database; and
wherein, optionally, one of the query parameters corresponds to multiple fields in the database, and the method further includes expanding the query parameter in one of the database query components to a specific one of the multiple fields.

6. The method of Claim 5, wherein the database query components include:
one or more column identifiers corresponding to the fields from which the visualization data is selected;
one or more filters applied to the visualization data to yield the selected visualization data;
an order identifier defining a sorting order of the fields from which the visualization data is selected;
a limit value defining a quantity of the selected visualization data returned by the database; and
one or more date range parameters defining date limits of the selected visualization data returned by the database.

7. The method of Claim 1, wherein subsets of the visualization data are associated with different data owner identifiers, one of the database query components including a specific one of the data owner identifiers, and the selected visualization data received from the database being limited to that corresponding to the specific one of the data owner identifiers; and
wherein, optionally, the specific one of the data owner identifiers is inserted into the database query after receipt of the database query components from the large language model system.

8. The method of Claim 1, wherein the one or more system prompts includes a definition of abbreviations contextually related to the visualization data.

9. The method of Claim 1, wherein the one or more system prompts include an instruction to the large language model system to generate the visualization specification in a JavaScript Object Notation (JSON) format.

10. The method of Claim 1, wherein the database query is a Structured Query Language (SQL) query.

11. A system for generating a visualization from visualization data defined by fields spanning in a database, the system comprising:
a natural language interface in communication with a large language model system responsive to a user prompt for the visualization;
a large language model output receiver in communication with the large language model system and receptive to a visualization specification and corresponding database query components generated in response to the user prompt, metadata of the fields in the database, and one or more system prompts including a request to generate the visualization specification and the database query components;
an intermediary data interface to the database executing thereto a database query composed from the database query components and receptive to selected visualization data from the database output in response to the database query; and
a visualization generator in communication with the intermediary data interface and the large language model output receiver, the visualization being generated from a combination of the selected visualization data and the visualization specification.

12. The system of Claim 11, wherein the natural language interface is receptive to a follow-up user prompt for an updated visualization; and
wherein, optionally, the output receiver is receptive to an updated visualization specification and updated database query components generated in response to the follow-up user prompt, metadata of the fields in the database, and the one or more system prompts including a request to generate the updated visualization specification and the updated database query components.

13. The system of Claim 11, wherein the database query components limit a scope of the selected visualization data returned by the database; and
wherein optionally the database query components include:
one or more column identifiers corresponding to the fields from which the visualization data is selected;
one or more filters applied to the visualization data to yield the selected visualization data;
an order identifier defining a sorting order of the fields from which the visualization data is selected;
a limit value defining a quantity of the selected visualization data returned by the database; and
one or more date range parameters defining date limits of the selected visualization data returned by the database.

14. The system of Claim 11, further comprising:
an access controller in communication with the intermediary data interface and storing a data owner identification associated with the user prompt, the data owner identification being inserted into the database query prior to transmission to the database;
wherein subsets of the visualization data are associated with different owner identifiers, and the selected visualization data received from the database being limited to that corresponding to the data owner identification.

15. An article of manufacture comprising a non-transitory program storage medium readable by a server computer system, the medium tangibly embodying one or more programs of instructions executable by the server computer system to perform a method for generating a visualization from visualization data defined by fields in a database, the method comprising:
receiving a user prompt for the visualization;
transmitting metadata of the fields in the database, one or more system prompts, and the user prompt to a natural language query interface to a large language model system, the one or more system prompts including a request to generate a visualization specification and corresponding database query components based upon the metadata and the user prompt;
receiving the visualization specification and the components of the database query as generated by the large language model system in response to the user prompt, the one or more system prompts, and the metadata;
composing a database query from database query components as generated by the large language model system;
executing the database query to an intermediary data interface of the database storing the visualization data;
receiving selected visualization data responsive to the database query from the database through the intermediary data interface; and
generating the visualization from the selected visualization data based upon the visualization specification; and
wherein, optionally, the method further includes:
receiving a follow-up user prompt for an updated visualization;
transmitting at least the follow-up user prompt to the natural language query interface;
receiving an updated visualization specification and updated database query components as generated by the large language model system in response to the follow-up user prompt;
composing an updated database query including updated database query components as generated by the large language model system;
executing the updated database query to the intermediary data interface;
receiving updated visualization data responsive the updated query; and
generating the updated visualization from the updated visualization data based upon the updated visualization specification.
